# EUROPEAN PATENT SPECIFICATION

(11) **EP 1 568 907 B1**
(45) Date of publication and mention of the grant of the patent: **07.02.2007**
(21) Application number: 04004333.3
(22) Date of filing: 26.02.2004
(51) Int. Cl.: F16D 25/12, F16D 25/08, B60T 11/16

(54) **Hydraulic force transfer system with a device for reducing vibrations and a vehicle provided with such a system**
Hydraulisches Kraftübertragungssystem mit einer Vorrichtung zur Schwingungsreduzierung und mit einem solchen System versehenes Fahrzeug
Système hydraulique de transmission de puissance avec un dispositif pour réduire des vibrations et véhicule équipé d'un tel système

(43) Date of publication of application: 31.08.2005
(73) Proprietor: Ford Global Technologies, LLC, Dearborn, MI 48126 (US)
(72) Inventor: Vennberg, Björn, 42343 Torslanda (SE)
(74) Representative: Mossmark, Anders Lennart

(56) References cited:
- EP-A- 0 591 064
- EP-A- 0 894 687
- DE-C- 19 920 821
- GB-A- 1 592 306
- US-A- 5 816 046
- US-A1- 2002 116 924

## Description

### TECHNICAL FIELD

The present invention concerns a hydraulic force transfer system with a device to reduce vibrations. In particular, the invention relates to a device to suppress or reduce vibrations in hydraulic systems, such as a hydraulic line connecting a clutch pedal and a hydraulic clutch control unit in a vehicle.

### BACKGROUND ART

The conventional hydraulic clutch control has a master cylinder which can be activated via a clutch pedal and which is connected to a reservoir. The master cylinder is hydraulically connected via a pressure line with the slave cylinder, so that, when the clutch pedal is pressed, the pressure generated in the master cylinder is transferred via the fluid column in the pressure line to the slave cylinder. As a result the clutch release bearing receives an activation force from the slave cylinder in order to separate via a release mechanism the clutch pressure plate from the clutch flywheel and hence the combustion engine from the gearbox of the motor vehicle.

In such hydraulic clutch controls, which can be regarded as quasi-stationary hydraulic force transfer systems in which there is no continuous flow of hydraulic fluid, the problem arises that vibrations from the combustion engine are transferred via the clutch plate, release mechanism, release bearing and fluid column in the pressure line between the slave cylinder and the master cylinder to the clutch pedal, so the clutch pedal vibrates perceptibly for the driver when he presses this down to release the clutch. The vibrations on the slave cylinder are transferred via the fluid column in the pressure line to the master cylinder as pressure pulses. This problem is particularly noticeable in high torque engines, such as diesel engines.

One solution to this problem is shown in US 5 816 046 in which an additional oscillator is connected in the pressure line between the slave cylinder and the master cylinder. This additional oscillator has a housing, the base and/or cover of which is formed by a freely vibrating membrane whose edge is firmly clamped to the housing and which together with the housing delimits a chamber which can be connected via connections to the master cylinder and slave cylinder of the hydraulic clutch control so that the membrane is pressurized by the hydraulic line between the master cylinder and slave cylinder. In this state of the art, because of a low frequency exciter vibration on the slave cylinder a low frequency pressure pulse is transmitted via the fluid column between the master cylinder and slave cylinder, where this pressure pulse excites the additional oscillator provided in the fluid column and tuned accordingly such that the additional oscillator vibrates at its inherent frequency which is higher than the frequency of the low frequency pressure pulse, so that the additional oscillator in the fluid column induces a higher frequency pressure pulse which the vibration-susceptible system comprising the master cylinder and clutch pedal cannot follow.

GB 1 592 306 discloses a hydraulic cylinder for clutch actuation, wherein a deformable wall or diaphragm arranged to seal a space between a cylinder wall and a piston in the cylinder. Substantially all the pressure in a space enclosed by the cylinder and the piston is applied to the deformable wall. The positioning of said wall in an annular gap between the cylinder and the piston allows it to reduce internal friction, but makes it less suitable for damping vibrations.

A similar solution is shown in EP 0 894 687, in which a chamber is enclosed by a cylinder, a piston and a rolling lobe diaphragm sealing the space between the piston and the cylinder. As stated above the main purpose of the diaphragm is to seal the chamber and to assist transfer of hydraulic fluid.

However, a problem with the above oscillator or damper arrangement is that it adds an additional component that must be located in the hydraulic line between the master cylinder and slave cylinder. In the engine compartment of a modem vehicle it is often difficult to find additional space, due the very compact packaging of the engine and its auxiliary components. The arrangement according to the invention solves both the problem relating to dampening of vibrations, as well as the problem of packaging the vibration dampening component without requiring additional space in the engine compartment

### DISCLOSURE OF INVENTION

It is therefore an object of the present invention to provide a method and an apparatus that solves the above problems. This is achieved by a hydraulic force transfer system, according to claim 1, and a vehicle provided with said system, according to claim 14.

According to a first embodiment, the present invention relates to a device for reducing vibrations in a hydraulic force transfer system, which system comprises a master cylinder and a slave cylinder connected to the master cylinder via a hydraulic line. The hydraulic system may preferably, but not necessarily, be placed between a mechanical actuator, such as a foot pedal, and a clutch for an internal combustion engine. The device further comprises a membrane positioned in a housing in at least one of said cylinders, the membrane being attached to a piston in said housing, so that the membrane can be pressurized hydraulically by a fluid column in the hydraulic line between the master cylinder and slave cylinder.

The said housing comprises a second cavity wherein the piston and the membrane delimit a second chamber that may be connected via a fluid connection to the master cylinder and via a further fluid connection to the slave cylinder. In addition, a first cavity in the piston and the membrane delimit a first chamber.

The first cavity contains a member having an inner surface that delimits the first chamber and clamps the membrane around its peripheral edge. The membrane itself may have any suitable shape, but is preferably adapted to the respective cross-sectional shapes of the first cavity and the outer, peripheral contour of said member that is arranged to clamp the membrane in place. For manufacturing reasons, the cross-sectional shape of the first cavity and its co-operating member is preferably cylindrical. Consequently, the membrane may have a circular shape and can preferably, but not necessarily, be made of spring steel.

The piston may be provided with a suitable means for retaining the said member in place. One such means may be a groove around the periphery of the internal surface of the first cavity to hold a fastening element, such as a resilient spring clip, for clamping the member against the membrane in the first cavity. Alternative means may range from a permanent attachment, achieved by e.g. welding, to a spring loaded means. However, pressure pulses in the hydraulic line should preferably be dampened by the membrane and not by movement of the member clamping the membrane in place.

According to a further embodiment the member itself may be replaced by a suitable spring element, such as a coil compression spring acting directly on the outer periphery of the membrane. The rear end of the said spring can be held in place by a circular resilient spring clip, as described above, or by means of an end closure means with an external threaded surface co-operating with an internal threaded surface in the second cavity.

In order to prevent hydraulic fluid from leaking out of the second chamber, and partially to prevent vibrations from being transmitted into the piston, a sealing element may be provided. The first cavity of the piston may be provided an annular groove in a surface located substantially in a substantially annular surface created by a radial plane surrounding the opening of the second cavity concentrically. This groove may hold a first sealing element facing the membrane, which sealing element seals the second chamber against the environment.

Similarly, the inner surface of the member placed in the first cavity of the piston may have an annular groove in a substantially radial plane in a part of its end surface surrounding the opening of the first cavity concentrically. This groove may hold a second sealing element facing the membrane, which sealing element seals the first chamber against the environment.

The member, or end closure means, located in the first cavity of the piston may have an outer surface having connecting means for an actuator connected to the piston. This actuator may be a mechanical actuator, such as a foot pedal.

The membrane may, at least in a rest state of the hydraulic force transfer system, be held against the direction of the hydraulic pressurization of the membrane by means of a spring element. The spring element may force the membrane against a support surface on at least one projection located in the second chamber. The spring element may be a coil compression spring.

The face of the annular surface supporting the membrane and the support surface on the at least one projection can lie in one plane, so that the membrane loaded by a spring element in the rest state of the hydraulic force transfer system is advantageously held flat. However, depending on the requirements concerned it is also possible to provide an offset between the supporting surface on the projection and the face surface on the ring-cylindrical section in the axial direction of the device and/or to chamfer or make convex the supporting surface at the projection and/or the face surface at the ring-cylindrical section so that the membrane is held curved convex or concave under a defined pretension. The spring element used for locating the membrane can be a spring ring or a plate spring. However the use of a coil compression spring is preferred.

As stated above the membrane can be made of spring steel. With a spring steel membrane with a ratio of diameter to thickness of the membrane preferably between 40 and 160, more preferably between 60 and 90, with the device according to the invention particularly good results can be achieved in the reduction of vibrations in a hydraulic clutch control.

The piston containing the vibration damping membrane is preferably, but not necessarily, located in the master cylinder. Alternatively, such a piston may be located in the slave cylinder.

The invention further relates to a motor vehicle provided with a hydraulic force transfer system according to the invention connecting an actuator device and a clutch in the vehicle.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a schematic drawing of a prior art system comprising a hydraulic line connecting a clutch pedal and a hydraulic clutch control unit in a vehicle;
- Figure 2: shows a master cylinder 15 according to the invention;
- Figure 3: shows a cross-section through the master cylinder of Figure 2.

### MODES FOR CARRYING OUT THE INVENTION

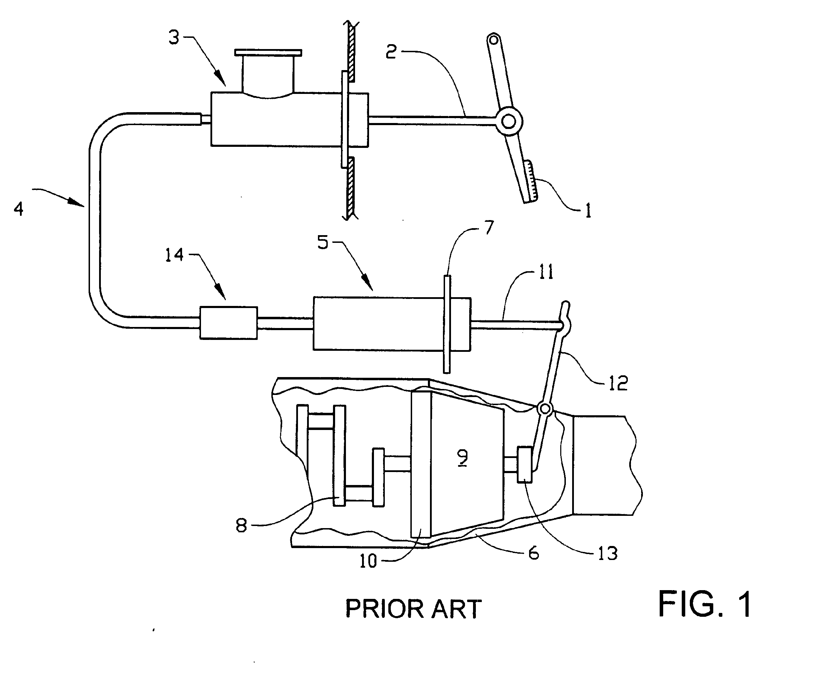

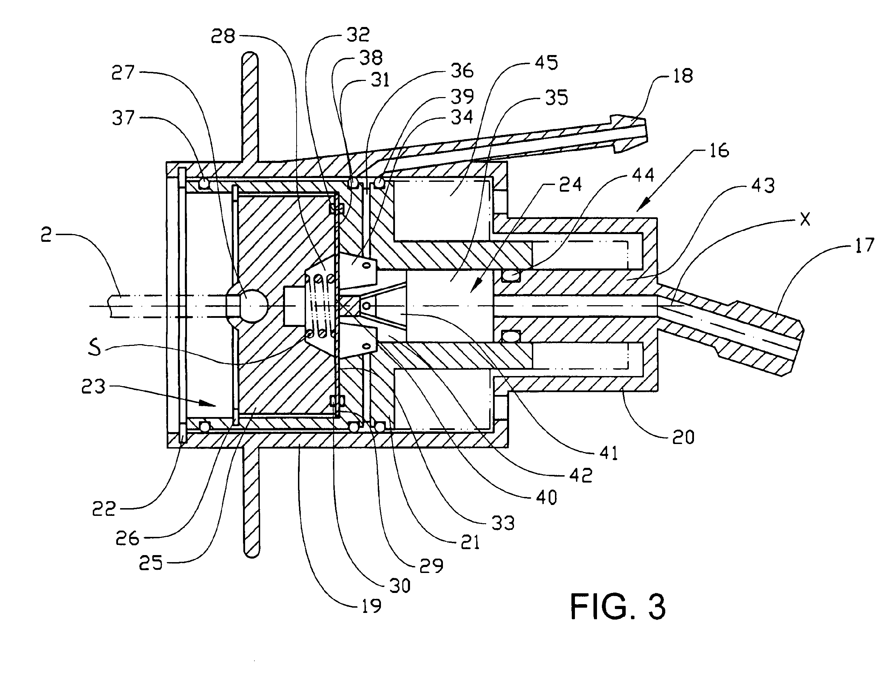

Figure 1 shows a system comprising a hydraulic line connecting a clutch pedal and a hydraulic clutch control unit in a vehicle, which line is provided with a damper unit. The figure shows a mechanical actuator in the form of a clutch pedal 1, or a first pivoted lever, acting on a first actuator arm 2 that in turn actuates a piston (see Fig.3) in a master cylinder 3. This causes an increased hydraulic pressure in a first hydraulic line 4, which pressure actuates a slave cylinder 5 attached directly or adjacent to a driveline 6 by means of an attachment flange 7, or similar. The driveline 6 is driven by an engine, indicated by a crankshaft 8, connected to a gearbox 9 that in turn is connected to the driving wheels (not shown) of the vehicle. A clutch unit 10, such as a friction clutch, is provided between the crankshaft 8 and the gearbox in order to allow disengagement of the engine during a gear change. The pressure in the hydraulic line 4 acts on a piston (not shown) in the slave cylinder 5, causing a displacement of a second actuator arm 11. The second actuator arm 11 pivots a second lever 12 that acts on a third actuator arm 13 to disengage the clutch unit 10.

Vibrations may be transmitted from the clutch unit 10 through the linkage comprising the second lever 12 and the second actuator arm 11, causing pressure pulses in the slave cylinder 5, the hydraulic line 4 and the master cylinder 3. Such pressure pulses will then be transmitted to the clutch pedal 1 and the foot of the driver of the vehicle. In order to eliminate such vibrations, the hydraulic line is provided with a damper unit 14 for dampening pressure pulses in the hydraulic line 4.

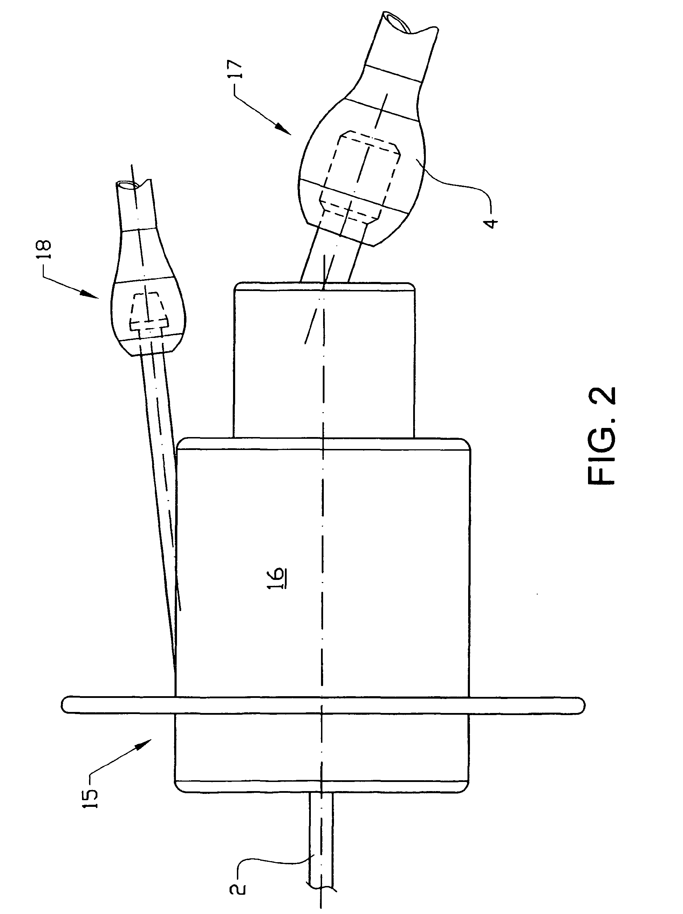

Figure 2 shows a master cylinder 15 according to the invention, in which a damper unit has been integrated into said cylinder. As in Figure 1, the master cylinder 15 is connected to a clutch pedal by means of an actuator arm 2. Furthermore, the master cylinder 2 comprises a housing 16 provided with a first fluid connector 17 connected to the hydraulic line 4. The housing is also provided with a second fluid connector 18 connected to a fluid reservoir (not shown) for maintaining a predetermined fluid level in the system.

Figure 3 shows a cross-section through the master cylinder 15 of Figure 2. The housing 16 comprises a first section 19, having a first diameter, and a second section 20, having a second, smaller diameter. The first and second sections 19, 20 are separated by a stepped section, which is preferably, but not necessarily, located in a radial plane at right angles to a central axis X of the housing. The relation between the first and second diameters can be selected depending on the length of stroke of the actuator arm 2, the desired pressure in the hydraulic line, and a number of other parameters. A piston 21 is slidably arranged in the housing 16 between a rest position, as shown in the figure, and an actuated position, as indicated by dash-dotted lines. The rest position of the piston 21 is limited by a stop in the form of a resilient spring clip 22 placed in a groove around the inner periphery of the first section 19 of the housing 16. In order to allow assembly of the master cylinder, the end face of the housing 16 containing the first section 19 is shaped as an open cylindrical section.

Similar to the housing 16, the piston 21 comprises a first hollow section 23, having a first diameter, and a second hollow section 24, having a second, smaller diameter. The first and second hollow sections 23, 24 are separated by a stepped section, which is preferably, but not necessarily, located in a radial plane at right angles to a central axis X of the housing. The first hollow section 23 is located adjacent the open end face of the housing 16 and provided with a cylindrical member 25 that can be slid into the first hollow section 23 and locked into position with a resilient spring clip 26 placed in a groove around the inner periphery of the first hollow section 23. In its outer end surface, the cylindrical member 25 is provided with attachment means 27 for the first actuator arm 2. On its inner surface said member 25 is provided with a central recess 28 and an annular radial surface 29 adjacent its outer diameter. The annular surface 29 is provided with a groove containing a first seal 30. Similarly, a stepped section 31 between the first and second hollow sections 23, 24 is provided with a corresponding groove containing a second seal 32. The seals 30, 32 preferably, but not necessarily, comprise O-rings made from a resilient material such as a rubber.

A circular, flat membrane 33 is located between the annular section 29 of the cylindrical member 25 and the stepped section 31 of the piston. A cavity is created by the membrane 33 and the recess 28 in the cylindrical member 25, which cavity is sealed by said first seal 30. A further cavity is created by the membrane 33 and the second hollow section 24 in the piston. This further cavity is connected to the hydraulic line 4 at one end and is sealed by said second seal 32 at its opposite end, which seal 32 prevents hydraulic fluid from leaking past the membrane 33. The thickness and the free diameter of the membrane are selected with respect to the frequency and/or amplitude of the pressure pulses in the hydraulic fluid.

The second hollow section 24 of the piston 21 comprises an inner and an outer section 34, 35. The inner section 34, adjacent the membrane 33, is provided with radial channels 36 connecting the hollow section 24 with the second fluid connector 18 that is connected to a fluid reservoir. This allows the volume of hydraulic fluid in the system to be maintained at a constant level, as fluid may be filled or drained through said radial channels 36 whenever the piston is in its rest position as shown in Figure 3.

The piston is provided with multiple seals in grooves around the outer circumference of its first hollow section 23. A first seal 37 is located adjacent its outer open end, which seal maintains a seal between the second fluid connector 18 and the atmosphere when the piston is in its actuated position (dash-dotted lines in Fig.3). Further second and third seals 38, 39 are located in axially displaced positions on either side of the exits of said radial channels 36 connecting the hollow section 24 with the exit of the second fluid connector 18 when the piston is in its rest position, as described above.

The inner section 34 of the second cavity 24 is further provided with a support surface 40 that contacts a central portion of the membrane 33 when said membrane is at rest. The support surface 40 is connected to the inner wall of the second cavity 24 by at least two radially extending sections 41 separated by fluid conducting openings 42. Depending on the position of the support surface 40, the membrane can be held flat, as shown in Figure 3, or in a pre-tensioned, concave shape into the first cavity.

Alternatively, it is also possible to provide a spring (S) in the first recess 28 for spring loading the membrane 33 towards support surface 40. In this way the membrane can be held flat or in a pre-tensioned, concave shape into the second cavity. The spring element (S) can be any type of suitable spring, such as a coil compression spring (indicated in Fig. 3). Depending on the dimensions of the membrane, the second cavity can also be arranged without a support surface for the membrane.

The outer section 35 of the second cavity comprises a hollow cylindrical section that is slidably arranged along the outer surface of a tubular section 43 extending axially into the second section 20 of the housing 16 from the end wall of said housing. The tubular section 43 is provided with a seal 44 in a groove around its outer circumference. This seal 44 prevents hydraulic fluid from leaking out of the second cavity into a space 45 inside the housing surrounding the second hollow section 24 of the piston. This space 45 is taken up by the first hollow section 23 of the piston 21 when the clutch pedal 1 is actuated. Consequently the space 45 must be ventilated to the atmosphere in order to allow air to escape.

The invention is not limited to the embodiments described above and may be varied freely within the scope of the appended claims.

## Claims

1. Hydraulic force transfer system with a device for reducing vibrations, which system comprises a master cylinder (3) and a slave cylinder (5) connected to the master cylinder via a hydraulic line (4), **characterized in that** said device comprises a membrane (33) which is positioned in a housing (16) in at least one of said cylinders (3, 5), the membrane being arranged in a piston (21) in said housing, so that the membrane (33) can be pressurized hydraulically by a fluid column between the master cylinder and slave cylinder.

2. Hydraulic force transfer system according to claim 1, **characterized in in that** a second cavity (24) in the piston (21) and the membrane (33) delimit a second chamber which can be connected via a connection to the master cylinder (3) and via a further connection to the slave cylinder (5).

3. Hydraulic force transfer system according to claim 2, **characterized in in that** a member (25) placed in a first cavity (23) in the piston (21) and the membrane (33) delimit a first chamber.

4. Hydraulic force transfer system according to claim 3, **characterized in in that** the member (25) has an inner surface that has a recess (28) delimiting the first chamber and that clamps the membrane (33) around its peripheral edge.

5. Hydraulic force transfer system according to claim 4, **characterized in in that** the piston (21) has a groove around the periphery of the internal surface of the first cavity (23) to hold a fastening element (26) for clamping the member (25) in the first cavity.

6. Hydraulic force transfer system according to claim 5, **characterized in that** the first cavity (23) of the piston (21) has an annular groove in a substantially radial plane surrounding the opening of the second cavity (24) concentrically to hold a sealing element (32) facing the membrane (33), which seals the second chamber against the environment.

7. Hydraulic force transfer system according to claim 5, **characterized in that** the inner surface of the member (25) has an annular groove in a substantially radial plane surrounding the opening of the first cavity (23) concentrically hold a sealing element (30) facing the membrane (33), which seals the first chamber against the environment.

8. Hydraulic force transfer system according to claim 5, **characterized in in that** the member (25) has an outer surface having connecting means (27) for an actuator (2) connected to the piston (21).

9. Hydraulic force transfer system according to claim 1, **characterized in in that** the membrane (33), at least in a rest state of the hydraulic force transfer system, is pressed by means of a spring element (S) against the direction of the hydraulic pressurization of the membrane (33) against a support surface (40) in the second chamber.

10. Hydraulic force transfer system according to claim 9, **characterized in in that** the spring element (S) is a coil compression spring.

11. Hydraulic force transfer system according to claim 1, **characterized in in that** the membrane (33) is made of spring steel.

12. Hydraulic force transfer system according to any one of the above claims 1-11, **characterized in in that** the piston (21) is located in the master cylinder (3).

13. Hydraulic force transfer system according to any one of the above claims 1-11, **characterized in in that** the piston (21) is located in the slave cylinder (5).

14. Motor vehicle provided with a hydraulic force transfer system according to claim 1, to reduce vibrations in a hydraulic force transfer system connecting an actuator device and a clutch in the vehicle.

## Patentansprüche

1. Hydraulische Kraftübertragungsanordnung mit einer Vorrichtung zur Schwingungsreduzierung, wobei die Anordnung einen Hauptzylinder (3) und einen Nebenzylinder (5), der mit dem Hauptzylinder mit einer Hydraulikleitung (4) verbunden ist, beinhaltet, **dadurch gekennzeichnet, dass** die Vorrichtung eine Membran (33) beinhaltet, die in einem Gehäuse (16) in zumindest einem der Zylinder (3, 5) angeordnet ist, wobei die Membran in einem Kolben (21) in dem Gehäuse derart angeordnet ist, dass die Membran (33) hydraulisch durch eine Flüssigkeitssäule, zwischen dem Hauptzylinder und dem Nebenzylinder, mit Druck beaufschlagt werden kann.

2. Hydraulische Kraftübertragungsanordnung nach Anspruch 1, **dadurch gekennzeichnet, dass** ein zweiter Hohlraum (24) in dem Kolben (21) und die Membran (33) eine zweite Kammer begrenzen, die über eine Leitung mit dem Hauptzylinder (3) und über eine weitere Leitung mit dem Nebenzylinder (5) verbunden werden kann.

3. Hydraulische Kraftübertragungsanordnung nach Anspruch 2, **dadurch gekennzeichnet, dass** ein Bauteil (25), welches in einem ersten Hohlraum (23) in dem Kolben (21) angeordnet ist, und die Membran (33) eine erste Kammer begrenzen.

4. Hydraulische Kraftübertragungsanordnung nach Anspruch 3, **dadurch gekennzeichnet, dass** das Bauteil (25) eine innere Fläche besitzt, die einer Ausnehmung (28) hat, welche die erste Kammer begrenzt und welche die Membran (33) ringsum ihrer Umfangskante einklemmt.

5. Hydraulische Kraftübertragungsanordnung nach Anspruch 4, **dadurch gekennzeichnet, dass** der Kolben (21) eine Nut um den Umfang der inneren Fläche des ersten Hohlraumes (23) aufweist, um ein Befestigungselement (26) zum Befestigen des Bauteils (25) in dem ersten Hohlraum zu halten.

6. Hydraulische Kraftübertragungsanordnung nach Anspruch 5, **dadurch gekennzeichnet, dass** der erste Kolben (23) des Kolbens (21) eine ringförmige Nut in einer im Wesentlichen radialen Ebene, welche die Öffnung des zweiten Hohlraumes (24) konzentrisch umgibt, aufweist, um ein der Membran (33) zugewandtes Abdichtelement (32) zu halten, welches die zweite Kammer gegen die Umgebung abdichtet.

7. Hydraulische Kraftübertragungsanordnung nach Anspruch 5, **dadurch gekennzeichnet, dass** die Innenfläche des Bauteils (25) eine ringförmige Nut in einer im Wesentlichen radialen Ebene, welche die Öffnung des ersten Hohlraums (23) konzentrisch umgibt, aufweist, um ein der Membran (33) zugewandtes Abdichtelement (30) aufzunehmen, welches die erste Kammer gegen die Umgebung abdichtet.

8. Hydraulische Kraftübertragungsanordnung nach Anspruch 5, **dadurch gekennzeichnet, dass** das Bauteil (25) eine äußere Fläche mit Verbindungsmitteln (27) für einen Aktor (2), der mit dem Kolben (21) verbunden ist, aufweist.

9. Hydraulische Kraftübertragungsanordnung nach Anspruch 1, **dadurch gekennzeichnet, dass** die Membran (33) zumindest in einem Ruhezustand der hydraulischen Kraftübertragungsanordnung mittels eines Federelements (S) entgegen der Richtung der hydraulischen Druckbeaufschlagung der Membran (33) gegen eine Auflagefläche (40) in der zweiten Kammer, gepresst ist.

10. Hydraulische Kraftübertragungsanordnung nach Anspruch 9, **dadurch gekennzeichnet, dass** das Federelement (S) eine Druckspiralfeder ist.

11. Hydraulische Kraftübertragungsanordnung nach Anspruch 1, **dadurch gekennzeichnet, dass** die Membran (33) aus Federstahl besteht.

12. Hydraulische Kraftübertragungsanordnung nach einem der vorherigen Ansprüche 1 bis 11, **dadurch gekennzeichnet, dass** der Kolben (21) im Hauptzylinder (3) angeordnet ist.

13. Hydraulische Kraftübertragungsanordnung nach einem der vorherigen Ansprüche 1 bis 11, **dadurch gekennzeichnet, dass** der Kolben (21) im Nebenzylinder (5) angeordnet ist.

14. Kraftfahrzeug mit einer hydraulischen Kraftübertragungsanordnung nach Anspruch 1, zum Reduzieren von Schwingungen in einer hydraulischen Kraftübertragungsanordnung, welche eine Aktoreinheit mit einer Kupplung in dem Fahrzeug verbindet.

## Revendications

1. Système de transfert de force hydraulique muni d'un dispositif pour réduire les vibrations, lequel système comporte un cylindre maître (3) et un cylindre asservi (5) relié au cylindre maître via une ligne hydraulique (4), **caractérisé en ce que** ledit dispositif comporte une membrane (33) qui est positionnée dans un boîtier (16) dans au moins un desdits cylindres (3, 5), la membrane étant agencée dans un piston (21) dans ledit boîtier, de sorte que la membrane (33) peut être comprimée de manière hydraulique par une colonne de fluide entre le cylindre maître et le cylindre asservi.

2. Système de transfert de force hydraulique selon la revendication 1, **caractérisé en ce qu'**une seconde cavité (24) dans le piston (21) et la membrane (33) délimitent une deuxième chambre qui peut être reliée via une connexion au cylindre maître (3) et via une connexion supplémentaire au cylindre asservi (5).

3. Système de transfert de force hydraulique selon la revendication 2, **caractérisé en ce qu'**un élément (25), placé dans une première cavité (23) dans le piston (21), et la membrane (33) délimitent une première chambre.

4. Système de transfert de force hydraulique selon la revendication 3, **caractérisé en ce que** l'élément (25) a une surface intérieure qui a un évidement (28) délimitant la première chambre, et qui immobilise la membrane (33) autour de son bord périphérique.

5. Système de transfert de force hydraulique selon la revendication 4, **caractérisé en ce que** le piston (21) a une gorge autour de la périphérie de la surface interne de la première cavité (23) pour maintenir un élément de fixation (26) pour immobiliser l'élément (25) dans la première cavité.

6. Système de transfert de force hydraulique selon la revendication 5, **caractérisé en ce que** la première cavité (23) du piston (21) a une gorge annulaire dans un plan sensiblement radial entourant l'ouverture de la seconde cavité (24) de manière concentrique pour maintenir un élément d'étanchéité (32) en vis-à-vis la membrane (33), qui assure l'étanchéité de la seconde chambre par rapport à l'environnement.

7. Système de transfert de force hydraulique selon la revendication 5, **caractérisé en ce que** la surface intérieure de l'élément (25) a une gorge annulaire dans un plan sensiblement radial entourant l'ouverture de la première cavité (33) de manière concentrique pour maintenir un élément d'étanchéité (30) en vis-à-vis la membrane (33), qui assure l'étanchéité de la première chambre par rapport à l'environnement.

8. Système de transfert de force hydraulique selon la revendication 5, **caractérisé en ce que** l'élément (25) a une surface extérieure ayant des moyens de connexion (27) pour un actionneur (2) relié au piston (21).

9. Système de transfert de force hydraulique selon la revendication 1, **caractérisé en ce que** la membrane (33), au moins dans un état de repos du système de transfert de force hydraulique, est mise sous pression par l'intermédiaire d'un ou d'éléments formant ressort à l'encontre de la direction de la mise sous pression hydraulique de la membrane (33) contre une surface de support (40) dans la seconde chambre.

10. Système de transfert de force hydraulique selon la revendication 9, **caractérisé en ce que** l'élément formant ressort (5) est un ressort hélicoïdal de compression.

11. Système de transfert de force hydraulique selon la revendication 1, **caractérisé en ce que** la membrane (33) est constituée d'acier à ressort.

12. Système de transfert de force hydraulique selon l'une quelconque des revendications 1 à 11, **caractérisé en ce que** le piston (21) est situé dans le cylindre maître (3).

13. Système de transfert de force hydraulique selon l'une quelconque des revendications 1 à 11, **caractérisé en ce que** le piston (21) est situé dans le cylindre asservi (5).

14. Véhicule à moteur muni d'un système de transfert de force hydraulique selon la revendication 1, pour réduire des vibrations dans un système de transfert de force hydraulique reliant un dispositif formant actionneur et un embrayage dans le véhicule.
